# EUROPEAN PATENT APPLICATION

(11) **EP 4 693 647 A1**
(43) Date of publication of application: **11.02.2026**
(21) Application number: 25749095.3
(22) Date of filing: 15.01.2025
(51) Int. Cl.: H01M 50/204, H01M 50/30, H01M 10/42, H01M 50/233, H01M 50/507

(54) **BATTERY PACK**

(30) Priority: 31.01.2024 KR 20240014553
(71) Applicant: LG Energy Solution, Ltd., Seoul 07335 (KR)
(72) Inventor: LEE, Kyu Ho, Daejeon 34122 (KR); YOO, Dong Won, Daejeon 34122 (KR)
(74) Representative: Plasseraud IP
(86) International application number: PCT/KR2025/000876
(87) International publication number: WO 2025/165008

(57) **Abstract**

A battery pack according to one example of the present invention comprises a pack case having a first inner surface, a second inner surface facing the first inner surface, and an internal space between the first inner surface and the second inner surface, and a plurality of modules disposed in the internal space of the pack case and including a plurality of secondary batteries having a first end with a vent portion and a second end in a direction opposite to the first end; each of the secondary batteries is arranged such that an imaginary center line passing through the first end and the second end is not parallel or orthogonal to the first inner surface and the second inner surface, respectively; and in each of the modules, when at least one secondary battery is disposed such that the first end is closer to the first inner surface than the second end, another secondary battery is disposed such that the first end is closer to the second inner surface than the second end.

## Description

### [Technical Field]

The present invention relates to a battery pack, and more particularly, relates to a battery pack comprising a plurality of cylindrical secondary batteries, in which the battery pack can prevent chain ignition within the battery pack.

This application claims the benefit of priority based on Korean Patent Application No. 10-2024-0014553 dated January 31, 2024, the disclosure of which is incorporated herein by reference in its entirety.

### [Background Art]

A secondary battery is a battery repeatedly usable through charging. Depending on a capacity and an output of an electronic device, a secondary battery can be manufactured in the form of a battery module and/or a battery pack. The battery module is a plurality of secondary batteries connected in series and/or in parallel. The battery pack is a plurality of battery modules connected in series and/or in parallel.

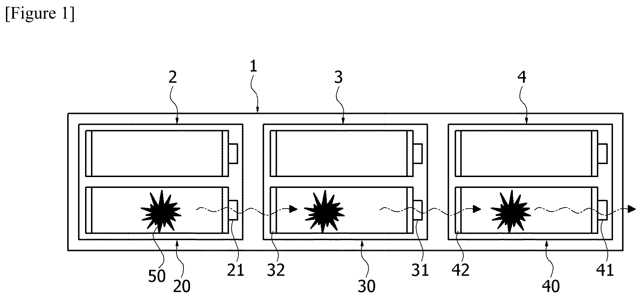

Figure 1 is for explaining a direction of flame transmission upon ignition of a secondary battery in a conventional battery pack.

Referring to Figure 1, a battery pack (1) comprises a plurality of battery modules (2, 3, 4). A conventional battery pack (1) adopts a structure in which a plurality of battery modules (2, 3, 4) is connected so that a positive terminal of one secondary battery and a negative terminal of another secondary battery adjacent thereto face each other.

For convenience of explanation, the plurality of battery modules (2, 3, 4) is separately referred to as a first module (2), a second module (3), and a third module (4) according to the arrangement order.

For example, when the first module (2) to the third module (4) are electrically connected in series, they may be disposed so that the positive terminal (21) of the first battery (20) in the first module (2) faces the negative terminal (32) of the second battery (30) in the second module (3), and the positive terminal (31) of the second battery (30) in the second module (3) faces the negative terminal (42) of the third battery (40) in the third module (4).

When the first battery (20) to the third battery (40) are cylindrical secondary batteries, the direction of flame discharge upon internal ignition is the direction where each positive terminal (21, 31, 41) is opened to the outside.

For example, when the first battery (20) ignites, an internal pressure of the first battery (20) increases due to the flame (50). When the positive terminal (21) of the first battery (20) is separated from the first battery (20) by the internal pressure, the flame (50) in the first battery (20) is discharged in the direction where the positive terminal (21) of the first battery (20) is opened.

In the conventional battery pack (1), upon the internal ignition of the first battery (20), the positive terminal (21) of the first battery (20) can be opened toward the negative terminal (32) of the second battery (30), and can damage the negative terminal (32) of the second battery (30).

The flame (50) in the first battery (20) can be transmitted in the direction where the positive terminal (21) of the first battery (20) is opened, that is, to the negative terminal (32) of the second battery (30), and can ignite the second battery (30).

When the second battery (30) ignites, it can be transmitted to the negative terminal (42) of the third battery (40), while the positive terminal (31) of the second battery (30) is opened. When the third battery (40) ignites, the flame (50) of the third battery (40) is transmitted to surrounding parts, while the positive terminal (41) of the third battery (40) is opened.

The flame (50) of the first battery (20) is sequentially transmitted from the first battery (20) to the second battery (30), and from the second battery (30) to the third battery (40), with the first battery (20) as an ignition starting point.

The conventional battery pack (1) can be chain-ignited, while the flame (50) is transmitted in the direction where the positive terminal is opened upon internal ignition of the secondary battery. The chain ignition of the secondary batteries (20, 30, 40) can cause a large fire by rapidly transmitting the flame (50) to the surrounding parts of the battery pack (1).

### [Disclosure]

### [Technical Problem]

The present invention has been devised to solve the above problems, which is intended to provide a battery pack capable of preventing, upon ignition of one secondary battery, flame transmission to another adjacent secondary battery by disposing negative terminals of two adjacent secondary batteries to face each other.

Also, it is intended to provide a battery pack in which vent portions of each secondary battery are arranged obliquely toward the inner surface of the battery pack without being arranged toward adjacent secondary batteries.

In addition, it is intended to provide a battery pack capable of preventing flame transmission to adjacent secondary batteries and/or modules by disposing positive terminals of secondary batteries to face an inner surface of a pack case, whereby upon ignition of the secondary battery, a flame allows to be discharged to the inner surface of the pack case.

Furthermore, it is intended to provide a battery pack capable of securing a flame escape space between a positive terminal of a secondary battery and an inner surface of a pack case.

Also, it is intended to provide a battery pack capable of reinforcing rigidity of a pack case by disposing a plurality of modules obliquely in an internal space of a pack case and mounting a reinforcing portion in an empty space created between the inner surface of the pack case and two adjacent modules.

In addition, it is intended to provide a battery pack capable of guiding flame to an inner surface of a pack case upon ignition of a secondary battery by providing a flame passage in the reinforcing portion.

Furthermore, it is intended to provide a battery pack capable of preventing flame in a flame passage from being transmitted to adjacent modules by attaching a heat-resistant sheet to the reinforcing portion.

### [Technical Solution]

In order to solve the above-described objects, according to one aspect of the present invention, a battery pack is provided, which comprises a pack case having a first inner surface, a second inner surface facing the first inner surface, and an internal space between the first inner surface and the second inner surface, and a plurality of modules disposed in the internal space of the pack case and including a plurality of secondary batteries having a first end with a vent portion and a second end in a direction opposite to the first end.

Also, each of the secondary batteries is arranged such that an imaginary center line passing through the first end and the second end is not parallel or orthogonal to the first inner surface and the second inner surface, respectively.

In addition, in each of the modules, when at least one secondary battery is disposed such that the first end is closer to the first inner surface than the second end, another secondary battery is disposed such that the first end is closer to the second inner surface than the second end.

Furthermore, in each module, the plurality of secondary batteries may be disposed in multiple rows such that the first ends of the secondary batteries in a first row adjacent to the first surface and the first ends of the secondary batteries in a second row adjacent to the second surface face different directions.

Also, in each module, the plurality of secondary batteries may be disposed in parallel along diagonal directions in which imaginary center lines are inclined relative to the first inner surface and the second inner surface, respectively.

In addition, in two modules adjacent to each other, the secondary batteries in the first row of any one module and the secondary batteries in the second row of another module may be disposed such that their respective imaginary center lines are coaxially positioned.

Furthermore, the second ends of the secondary batteries in the first row of any one module may be disposed to face the second ends of the secondary batteries in the second row of another module.

Also, the two modules adjacent to each other may be disposed such that a first empty space is formed between them and the first inner surface, and a second empty space is formed between them and the second inner surface.

In addition, each module may be provided so that upon ignition of the secondary battery in the first row, a flame is discharged toward the first empty space, and upon ignition of the secondary battery in the second row, a flame is discharged toward the second empty space.

Furthermore, the battery pack may comprise a first reinforcing portion disposed in the first empty space and having a first flame passage provided so that the flame generated upon ignition of the secondary battery in the first row is accommodated, and a second reinforcing portion disposed in the second empty space and having a second flame passage provided so that the flame generated upon ignition of the secondary battery in the second row is accommodated.

Also, the first reinforcing portion may be positioned so that the first flame passage faces the first end of the secondary battery in the first row of the adjacent module, and the second reinforcing portion may be positioned so that the second flame passage faces the first end of the secondary battery in the second row of the adjacent module.

In addition, the first reinforcing portion may comprise a plurality of first flame passages partitioned by a first rib. The first flame passage may provide a flame escape space.

Furthermore, the first reinforcing portion may comprise a first heat-resistant sheet disposed in the first flame passage.

Also, the first heat-resistant sheet may comprise a mica sheet having an alumina silicate component.

In addition, the second reinforcing portion may comprise a plurality of second flame passages partitioned by a second rib.

Furthermore, the second reinforcing portion may comprise a second heat-resistant sheet disposed in the second flame passage.

Also, the second heat-resistant sheet may comprise a mica sheet having an alumina silicate component.

In addition, the first end may comprise a positive terminal, and the second end may comprise a negative terminal.

Furthermore, a battery pack related to another example of the present invention may comprise a pack case having a first inner surface, a second inner surface facing the first inner surface, and an internal space between the first inner surface and the second inner surface, and a plurality of modules disposed in the internal space of the pack case and including a plurality of secondary batteries having positive terminals and negative terminals; each of the secondary batteries may be arranged such that an imaginary center line passing through the positive terminal and the negative terminal is not parallel or orthogonal to the first inner surface and the second inner surface; and in each of the modules, when at least one secondary battery is disposed such that the positive terminal is closer to the first inner surface than the negative terminal, another secondary battery may be disposed such that the positive terminal is closer to the second inner surface than the negative terminal.

### [Effects of Invention]

As discussed above, the battery pack related to at least one example of the present invention has the following effects.

The battery pack can prevent, upon ignition of one secondary battery, flame transmission to another adjacent secondary battery by disposing negative terminals of two adjacent secondary batteries to face each other.

In addition, the battery pack can prevent flame transmission to adjacent secondary batteries and/or modules by disposing positive terminals of secondary batteries to face an inner surface of a pack case, whereby upon ignition of the secondary battery, a flame allows to be discharged to the inner surface of the pack case.

As vent portions of each secondary battery are arranged obliquely toward the inner surface of the battery pack without being arranged toward adjacent secondary batteries, the flame discharged through the vent portion upon ignition of the secondary battery can be discharged to the inner side of the pack case.

Also, it is possible to secure a flame escape space between a positive terminal of a secondary battery and an inner surface of a pack case.

In addition, the battery pack can reinforce rigidity of a pack case by disposing a plurality of modules obliquely in an internal space of a pack case, and thus mounting a reinforcing portion in an empty space to be created.

Furthermore, the battery pack can provide a flame passage coaxially with an imaginary center line of a secondary battery adjacent to the reinforcing portion to guide flame upon ignition of the secondary battery to an inner surface of a pack case connected to the flame passage, thereby preventing the flame from being transmitted to the adjacent module.

In addition, the battery pack can prevent flame in a flame passage from being transmitted to the adjacent module by attaching a heat-resistant sheet to any one or both surfaces of the inner surface of the reinforcing portion including the flame passage and the outer surface of the reinforcing portion, which is the outer surface of the flame passage.

### [Brief Description of Drawings]

Figure 1 is for explaining a direction of flame transmission upon ignition of a secondary battery in a conventional battery pack.
Figure 2 is a diagram for explaining a battery pack according to a first example of the present invention, on which a reinforcing portion is not mounted.
Figure 3(a) is a configuration diagram of a secondary battery, and Figure 3(b) is a diagram for explaining a process in which a vent portion provided with a positive terminal is opened by flame upon ignition of a secondary battery.
Figure 4 is a diagram for explaining a direction where flames of secondary batteries ignited in a battery pack according to a first example of the present invention are transmitted.
Figure 5 is a diagram for explaining arrangement of first and second modules adjacent to each other and arrangement of first and second reinforcing portions in a battery pack according to a second example of the present invention.
Figure 6 is a diagram for explaining arrangement of multiple secondary batteries provided in a first module according to a second example of the present invention and an arrangement state of first and second reinforcing portions for the first module.
Figure 7 is a diagram for explaining a direction where flames of secondary batteries ignited in a battery pack according to a second example of the present invention are transmitted.

### [Mode for Invention]

Hereinafter, with reference to the attached drawings, a battery pack related to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

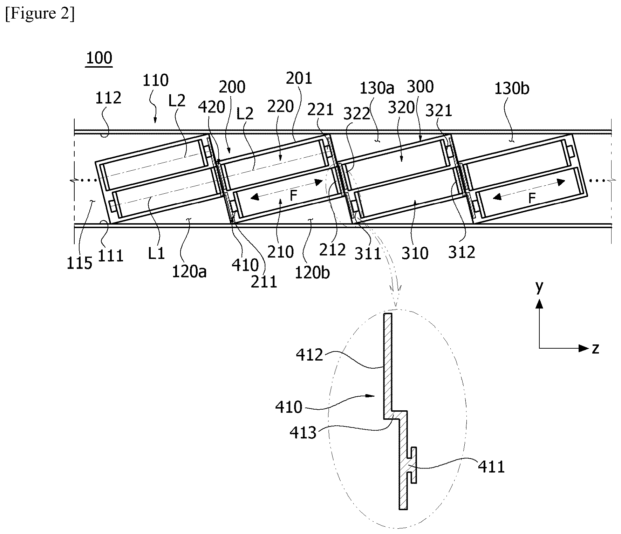

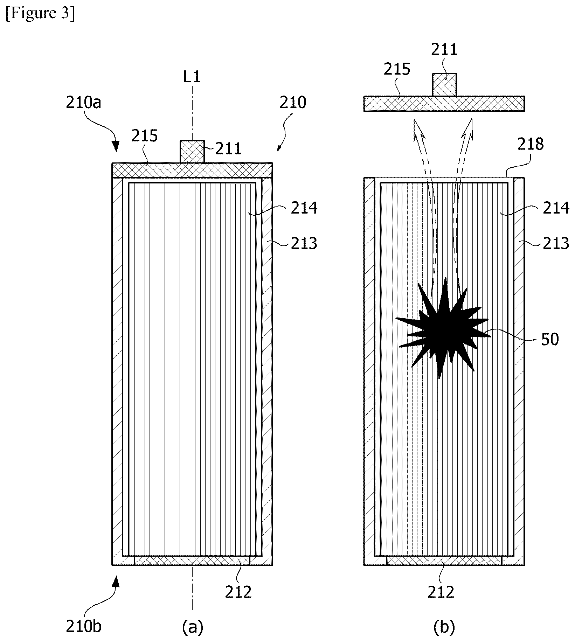

Figure 2 is a diagram for explaining a battery pack according to a first example of the present invention, on which a reinforcing portion is not mounted; Figure 3(a) is a configuration diagram of a secondary battery according to one example of the present invention; and Figure 3(b) is a diagram for explaining a process in which a vent portion provided with a positive terminal is opened by flame upon ignition of a secondary battery.

Referring to Figure 2, a battery pack (100) according to one example of the present invention comprises a pack case (110) having a first inner surface (111), a second inner surface (112) facing the first inner surface (111), and an internal space (115) between the first inner surface (111) and the second inner surface (112). As one example, the first inner surface (111) and the second inner surface (112) may be disposed in parallel.

In addition, the battery pack (100) comprises a plurality of modules (200, 300) disposed in the internal space of the pack case (110) and including a plurality of secondary batteries (210, 220, 310, 320). Each module (200, 300) comprises a plurality of secondary batteries (210, 220, 310, 320). Referring to Figure 3(a), each secondary battery (210) has a first end (210a) having a vent portion (215), and a second end (210b) in a direction opposite to the first end (210a).

Referring to Figure 2, the direction from the first inner surface (111) of the pack case (110) toward the second inner surface (112) may be the y-axis direction, and the x-axis direction orthogonal to the y-axis direction may represent the arrangement direction of multiple modules within the pack case (110).

As one example, the first end (210a) may comprise a positive terminal (211), and the second end (210b) may comprise a negative terminal (212). In such a structure, the battery pack (100) may comprise a plurality of modules (200, 300) disposed in the internal space (115) of the pack case (110) and including a plurality of secondary batteries (210, 220, 310, 320) having positive terminals and negative terminals.

The module (200, 300) may comprise a module case (201) and a plurality of secondary batteries (210, 220) disposed in the module case (201). The module case (201) may have an accommodating space capable of accommodating a plurality of secondary batteries (210, 220), and the module case (201) may have a structure in which both sides are opened to expose a first end (210a) and a second end (210b) of each secondary battery (e.g., 210) to the outside.

Within each module (200, 300), the plurality of secondary batteries may be disposed in a plurality of rows. For example, the secondary batteries may be arranged in a first row adjacent to the first surface (111) of the pack case (110), and the secondary batteries may be arranged in a second row adjacent to the second surface (112) of the pack case (110). A plurality of secondary batteries may be arranged to form a plurality of rows along the direction from the first surface (111) toward the second surface (112).

Also, each of the secondary batteries (210, 220, 310, 320) may be arranged so that an imaginary center line (L1, L2) passing through the positive terminal of the first end and the negative terminal of the second end is not parallel or orthogonal to the first inner surface (111) and the second inner surface (112) of the pack case (110), respectively. Referring to Figures 2 and 3(a), the secondary battery (e.g., 210) may be arranged such that the imaginary center line (L1) passing through the positive terminal (211) of the first end (210a) and the negative terminal (212) of the second end (210b) is not parallel or orthogonal to the first inner surface (111) of the pack case (110), and may be arranged in a diagonal direction. In addition, the secondary battery (e.g., 210) may be arranged such that the imaginary center line (L1) passing through the positive terminal (211) of the first end (210a) and the negative terminal (212) of the second end (210b) is not parallel or orthogonal to the second inner surface (112) of the pack case (110), and may be arranged in a diagonal direction.

The imaginary center lines (L1, L2) may be divided into a first imaginary center line (L1) and a second imaginary center line (L2). As one example, the first imaginary center line (L1) is an imaginary center line connecting the centers of the positive terminal (211, 311) and the negative terminal (212, 312) of the secondary battery (210, 310) in the first row, and the second imaginary center line (L2) is an imaginary center line connecting the centers of the positive terminal (221, 321) and the negative terminal (222, 322) of the secondary battery (220, 320) in the second row.

The plurality of secondary batteries (210, 220, 310, 320) may be disposed in parallel along diagonal directions (F) inclined relative to the first inner surface (111) and the second inner surface (112), respectively. The diagonal direction (F) may be a direction where the first imaginary center line (L1) and the second imaginary center line (L2) are inclined relative to the first inner surface (111) and the second inner surface (112), respectively.

In two modules (200, 300) adjacent to each other, the plurality of secondary batteries (210, 220, 310, 320) may be disposed in multiple rows such that the positive terminals (211, 311) of the first ends of the secondary batteries (210, 310) in the first row and the positive terminals (221, 321) of the first ends of the secondary batteries (220, 320) in the second row face different directions. As one example, in two modules (200, 300) adjacent to each other, when at least one secondary battery (210, 310) is disposed such that the positive terminal (211, 311) is closer to the first inner surface (111) than the negative terminal (212, 312), another secondary battery (220, 320) may be disposed such that the positive terminal (221, 321) is closer to the second inner surface (112) than the negative terminal (222, 322). That is, the plurality of secondary batteries (210, 220, 310, 320) may be disposed so that the positive terminals (211, 311) of the first ends of the secondary batteries (210, 310) in the first row are close to the first surface (111) in a direction toward the first surface (111), and may be disposed so that the positive terminals (221, 321) of the first ends of the secondary batteries (220, 320) in the second row are close to the second surface (112) in a direction toward the second surface (112).

In the present example, for the convenience of explanation, two modules (200, 300) adjacent to each other are separately referred to as the first module (200) and the second module (300) depending on the arrangement order in accordance with the module arrangement direction (x-axis direction).

Referring to Figure 2, the first module (200) is referred to as a module disposed on the left side of the pack case (110) (also called the front side according to the longitudinal direction of the pack case). Also, the secondary battery provided in the first module (200) is referred to as a "first secondary battery (210, 220)." In addition, the secondary battery provided in the first module (200) is referred to as a "first secondary battery (210, 220)." The first secondary battery (210, 220) may comprise the first secondary battery (210) in the first row and the first secondary battery (220) in the second row.

Meanwhile, the second module (300) is referred to as a module disposed on the right side of the pack case (110) (also called the rear side according to the longitudinal direction of the pack case), which is a module disposed at the rear end of the first module (200) adjacent to the first module (200). The second module (300) has the same structure as the first module (200). In addition, the secondary battery provided in the second module (300) is referred to as a "second secondary battery (310, 320)." The second secondary battery (310, 320) may comprise a second secondary battery (310) in the first row and a second secondary battery (320) in the second row.

When each module (200, 300) is arranged obliquely in the pack case (110), a plurality of empty spaces may be formed between each module (200, 300), and the first surface (111) and the second surface (112). The empty space may function as a flame escape space upon ignition of the secondary battery.

In the first module (200), the positive terminal (211) of the first secondary battery (210) in the first row may be disposed adjacent to the first inner surface (111). In the internal space (115) of the pack case (110), the positive terminal (211) of the first secondary battery (210) in the first row is positioned to face the adjacent first empty space (120a).

The positive terminal (221) of the first secondary battery (220) in the second row may be disposed adjacent to the second inner surface (112). In the internal space (115) of the pack case (110), the positive terminal (221) of the first secondary battery (220) in the second row is positioned to face the adjacent second empty space (130a).

The second module (300) may be disposed so that the first secondary battery (210) of the first row in the first module (200), and the second secondary battery (320) of the second row in the second module (300) are positioned coaxially on an imaginary axis. As one example, the second module (300) may be disposed at the rear end of the first module (200) so that a partial region is in contact with the first module (200).

As one example, the first secondary battery (210) of the first row in the first module (200), and the second secondary battery (320) of the second row in the second module (300) may be disposed in a straight line along the diagonal direction (F).

Also, the negative terminal (212) of the first secondary battery (210) in the first row of the first module (200) may be disposed to face the negative terminal (322) of the second secondary battery (320) in the second row of the second module (300).

In addition, the positive terminal (211) of the first secondary battery (210) in the first row of the first module (200) may be disposed on the opposite side to the positive terminal (321) of the second secondary battery (320) in the second row of the second module (300).

The positive terminal (311) of the second secondary battery (310) in the first row may be positioned to face the adjacent first empty space (120b). In addition, the positive terminal (321) of the second secondary battery (320) in the second row may be positioned to face the adjacent second empty space (130b). In this document, the plurality of first empty spaces (120a, 120b) is referred to as a space positioned between the first surface (111) of the pack case (110) and each module (200, 300), and the plurality of second empty spaces (130a, 130b) is referred to as a space positioned between the second surface (112) of the pack case (110) and each module (200, 300).

A plurality of first empty spaces (120a, 120b) may be provided in the internal space of the pack case (110) as the first and second modules (200, 300) are disposed obliquely relative to the first inner surface (111). At this time, each of the first empty spaces (120a, 120b) may be an individual space capable of being partitioned into different regions of the first inner surface (111). Each of the first empty spaces (120a, 120b) may be a closed space separated along the module arrangement direction.

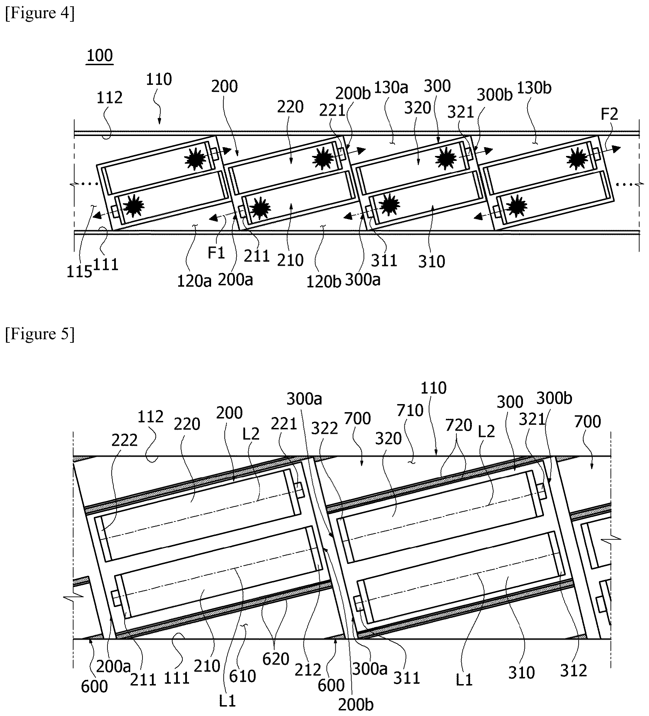

Any one of the first empty spaces (120a) may be a space adjacent to the positive terminal (211) of the first secondary battery (210) in the first row of the first module (200). Another of the first empty spaces (120b) may be a space adjacent to the positive terminal (311) of the second secondary battery (310) in the first row of the second module (300). Referring to Figure 4, the first empty space (120a, 120b) may have a triangular cross-section including a parti region of the first inner surface (111).

A plurality of second empty spaces (130a, 130b) may be provided in the internal space of the pack case (110) as the first and second modules (200, 300) are disposed obliquely relative to the second inner surface (112). At this time, each of the second empty spaces (130a, 130b) may be an individual space capable of being partitioned into different regions of the second inner surface (112). Each of the second empty spaces (130a, 130b) may be a closed space separated along the module arrangement direction.

Each of the second empty spaces (130a, 130b) may be spaced apart from each of the first empty spaces (120a, 120b) along the diagonal direction (F).

Any one of the second empty spaces (130a) may be a space adjacent to the positive terminal (221) of the first secondary battery (220) in the second row of the first module (200). In addition, another of the second empty spaces (130b) may be a space adjacent to the positive terminal (321) of the second secondary battery (320) in the second row of the second module (300). Referring to Figure 4, the second empty space (130a, 130b) may have a triangular cross-section including a partial region of the second inner surface (112).

The battery pack (100) may comprise a plurality of first bus bars (410) electrically connecting the secondary batteries (210, 310) disposed in the first row in each module, and a plurality of second bus bars (420) electrically connecting the secondary batteries (220, 320) disposed in the second row. The first and second bus bars (410, 420) have the same structure.

The first and second modules (200, 300) may be provided so that the secondary batteries are electrically connected in series.

As one example, the first bus bar (410) may have a positive electrode connection portion (411) provided to be connectable to any one positive terminal of the secondary batteries each disposed in the same row of the first module and the second module, and a negative electrode connection portion (412) provided to be electrically connectable to another negative terminal of the secondary batteries adjacent thereto.

The first bus bar (410) may have the bending portion (413) provided between the positive electrode connection portion (411) and the negative electrode connection portion (412).

The negative electrode connection portion (412) may be bent at a predetermined angle relative to the positive electrode connection portion (411), and the first bus bar (410) may electrically connect the negative terminal (212) of the first secondary battery (210) in the first row of the first module (200) and the positive terminal (311) of the secondary battery (310) in the first row of the second module (300).

The second bus bar (420) may electrically connect the positive terminal (221) of the second secondary battery (220) in the second row of the first module (200) and the negative terminal (322) of the second secondary battery (320) in the second row of the second module (300).

Figure 4 is a diagram for explaining a direction where flames of secondary batteries ignited in a battery pack according to a first example of the present invention are transmitted. Figure 4 is a diagram in which a first bus bar (410) and a second bus bar (420) are omitted from the battery pack (100) of Figure 2, which illustrates a flame discharge direction.

Referring to Figures 3 and 4, the direction in which flame (50) of the first secondary battery (210, 220) is discharged is the direction in which the positive terminal (211, 221) is opened.

In the first module (200), the positive terminal (211) of the first secondary battery (210) in the first row is positioned to face the adjacent first empty space (120a). Upon ignition of the first secondary battery (210) in the first row, the flame (50) may be discharged along the first direction (F1) to any one of the first empty spaces (120a).

The first direction (F1) is a direction inclined to the first inner surface (111) toward the front side of the pack case (110).

When the first secondary battery (210) of the first row in the first module (200) is ignited, the flame (50) of the first secondary battery (210) in the first row may be discharged to any one of the first empty spaces (120a) along the first direction (F1). As one example, the flame (50) may also be discharged to the outside of the pack case (110) by damaging a partial region of the first inner surface (111) of the pack case (110).

The positive terminal (221) of the first secondary battery (220) in the second row of the first module (200) is positioned to face the adjacent second empty space (130a). Upon ignition of the first secondary battery (220) in the second row, the flame (50) may be discharged to any one of the second empty spaces (130a) along the second direction (F2). As one example, the flame (50) may also be discharged to the outside of the pack case (110) by damaging a partial region of the second inner surface (112) of the pack case (110) in any one of the second empty spaces (130a).

The second direction (F2) may be the opposite direction to the first direction (F1).

The discharge direction of the flame (50) of the second secondary battery (310, 320) in the second module (300) is the direction where the positive terminal (311, 321) is opened.

The positive terminal (311) of the second secondary battery (310) in the first row of the second module (300) is positioned to face the adjacent first empty space (120b). When the second secondary battery (310) of the first row in the second module (300) is ignited, the flame (50) of the second secondary battery (310) in the first row may be discharged to another first empty space (120b) along the first direction (F1). As one example, it may be discharged to the outside of the pack case (110) by damaging a partial region of the first inner surface (111) of the pack case (110).

The positive terminal (321) of the second secondary battery (320) in the second row of the second module (300) is positioned to face the adjacent second empty space (130b). Upon ignition of the second secondary battery (320) in the second row, the flame (50) may be discharged to another second empty space (130b) along the second direction (F2). As one example, the flame (50) may be discharged to the outside of the pack case (110) by damaging a partial region of the second inner surface (112) of the pack case (110) in another second empty space (130b).

Through such a structure, the battery pack (100) can prevent the flame (50) from being transmitted to other secondary batteries adjacent to the ignited secondary battery by allowing the flame (50) upon ignition of the secondary battery to be discharged to different regions of the first inner surface (111) and the second inner surface (112) of the pack case.

In addition, the battery pack (100) can prevent the flame (50) ignited in the first secondary battery (210, 220) from being transmitted to the second secondary battery (310, 320) by disposing the positive terminal (211, 221) of the first secondary battery (210, 220) and the negative terminal (312, 322) of the second secondary battery (310, 320) so as not to face each other.

In this document, all secondary batteries may have the same structure.

As one example, referring to Figure 3(a), the first secondary battery (210) may comprise a battery can (213), an electrode assembly (214), an electrolyte (not shown), a positive terminal (211), and a negative terminal (212).

The electrode assembly (214) is obtained by winding a positive electrode (not shown) and a negative electrode (not shown) via a separator (not shown) in the form of a roll. The electrode assembly (214) is accommodated in the internal space (115) of the battery can (213) together with the electrolyte (not shown).

The battery can (213) has a cylindrical shape with an opening (218). The negative terminal (212) may be provided on the bottom surface of the battery can (213). The negative terminal (212) is electrically connected to the negative electrode (not shown) of the electrode assembly (214).

A vent portion (215) provided with the positive terminal (211) is provided in the opening (218) of the battery can (213). The vent portion (215) is provided to seal the opening (218) of the battery can (213). The vent portion (215) is provided integrally with the positive terminal (211). The positive terminal (211) is electrically connected to the positive electrode (not shown) of the electrode assembly (214).

Referring to Figure 3(b), upon internal ignition of the first secondary battery (210), the pressure of the internal space of the battery can (213) increases due to the flame (50). The high-pressure internal pressure pressurizes the vent portion (215) provided with the positive terminal (211). The vent portion (215) provided with the positive terminal (211) may be separated from the battery can (213) by the high-pressure internal pressure.

The flame (50) in the battery can (213) is discharged to the outside through the opened portion of the vent portion (215) provided with the positive terminal (211), that is, the opening (218) of the battery can (213). The flame (50) may be discharged from the battery can (213) in the direction where the high-pressure internal pressure pressurizes the vent portion (215) provided with the positive terminal (211).

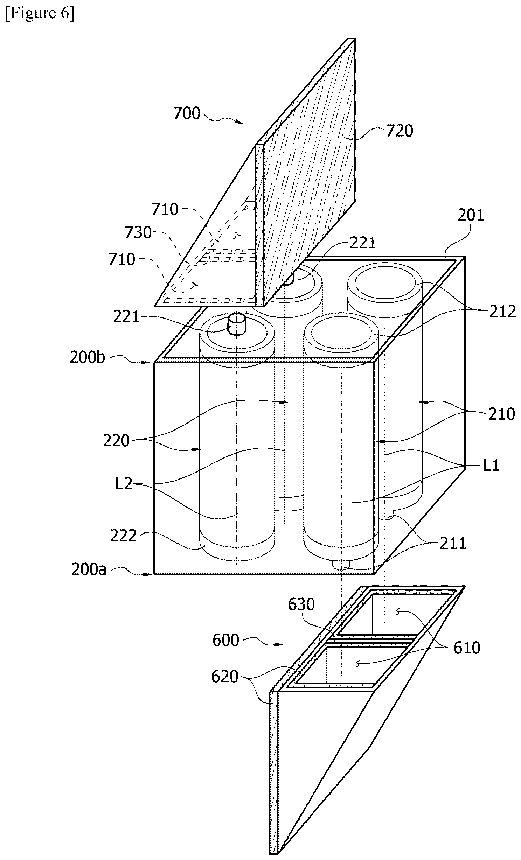

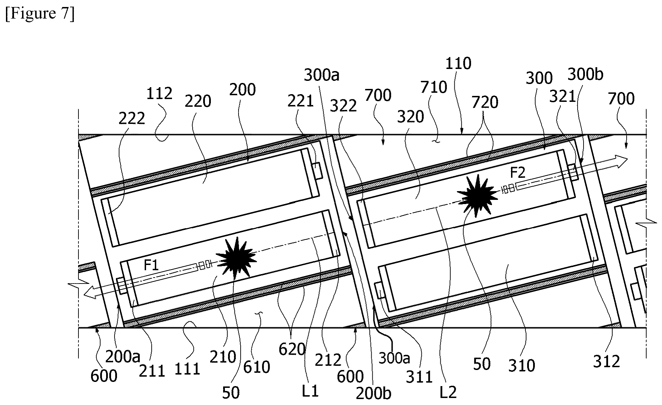

Figure 5 is a diagram for explaining arrangement of first and second modules adjacent to each other and arrangement of first and second reinforcing portions in a battery pack according to a second example of the present invention. Figure 6 is a diagram for explaining arrangement of multiple secondary batteries provided in a first module according to a second example of the present invention and an arrangement state of first and second reinforcing portions for the first module. Figure 7 is a diagram for explaining a direction where flames of secondary batteries ignited in a battery pack according to a second example of the present invention are transmitted.

Referring to Figures 5 to 7, the battery pack according to the second example of the present invention will be described as follows.

The present example is an example in which first and second reinforcing portions (600, 700) are further installed in the battery pack (100) illustrated in Figure 2, to reinforce rigidity of a pack case (110).

In this document, to clearly explain the first and second reinforcing portions (600, 700) and the discharge direction of flame, drawing representation of bus bars electrically connecting the secondary batteries in Figures 5 and 7 will be omitted.

Hereinafter, first and second reinforcing portions (600, 700) will be described.

Referring to Figure 6, the first module (200) comprises a plurality of first secondary batteries (210, 220) and a module case (201). The first secondary batteries (210, 220) comprise one or more first secondary batteries (210) in the first row and one or more first secondary batteries (220) in the second row. The module case (201) is for protecting the plurality of first secondary batteries (210, 220).

For example, if the first module (200) comprises four first secondary batteries (210, 220) disposed in 2×2, the four first secondary batteries (210, 220) may be accommodated in the module case (201) such that two positive terminals (211) are positioned on the front-end side (200a) of the first module (200) facing the first surface (211), and two positive terminals (221) are positioned on the rear-end side (200b) of the first module (200) facing the second surface (112). However, the number of first secondary batteries (210, 220) used may vary depending on the capacity of the first module (200), which is not limited to the structure illustrated in this document.

Referring to Figures 5 and 6, the first reinforcing portion (600) is mounted on the first inner surface (111) in each of the first empty spaces (120a, 120b), whereby it is possible to reinforce the rigidity of the pack case (110) in the first inner surface (111).

The first reinforcing portion (600) has a first flame passage (610) provided to guide the flame (50) discharged along the first direction (F1) to the first inner surface (111).

The first reinforcing portion (600) may be disposed in the first empty space (120a, 120b) so that the first flame passage (610) is positioned coaxially with the first imaginary center line (L1) of the secondary battery (210, 310) in the first row of the adjacent module.

Referring to Figures 5 and 6, the first flame passage (610) may be disposed to face the positive terminal (211) of the front-end side (200a) of the first module (200).

The first reinforcing portion (600) may comprise a plurality of first flame passages (610) partitioned by the first rib (630), and may be disposed so that each of first flame passages (610) is positioned coaxially with the first imaginary center line (L1) of each secondary battery disposed in the first row of the adjacent module.

The first rib (630) is for reinforcing the rigidity of the first flame passage (610). The plurality of first flame passages (610) partitioned by the first rib (630) may be provided to face the secondary batteries disposed in the first row, respectively.

In addition, the first reinforcing portion (600) may comprise a first heat-resistant sheet (620) for blocking the flame (50) in the first flame passage (610) from being transmitted to adjacent modules.

Referring to Figures 5 and 6, the first heat-resistant sheet (620) may also be mounted on the outer surface of the first reinforcing portion (600) exposed to the first empty space (120a, 120b). The first heat-resistant sheet (620) may also be mounted on the inner surface of the first flame passage (610).

The first heat-resistant sheet (620) has heat resistance to the extent that can withstand flame (50). As the first heat-resistant sheet (620), a mica sheet may be used. The mica sheet is a heat-resistant sheet having an alumina silicate component. The mica sheet has a mica material.

For example, referring to Figure 7, in the first module (200), when the first secondary battery (210) of the first row is ignited, the positive terminal (211) of the first secondary battery (210) in the first row is opened in the first direction (F1) due to the flame (50).

When the positive terminal (211) of the first secondary battery (210) in the first row is opened, the flame (50) may be discharged to the first flame passage (610) along the first direction (F1).

The first reinforcing portion (600) is disposed so that the first flame passage (610) is positioned in a straight line with the first imaginary center line (L1) of the first secondary battery (210) in the first row, whereby upon ignition of the first secondary battery (210) in the first row, it may guide the flame (50) to the first inner surface (111) of the pack case (110). In the first flame passage (610), heat transfer with the adjacent module (200 or 300) may be blocked by the first heat-resistant sheet (620).

Hereinafter, the second reinforcing portion (700) will be described as follows.

Referring to Figure 5, the second reinforcing portion (700) may be mounted on the second inner surface (112) in the second empty space (130a, 130b), thereby reinforcing the rigidity of the pack case (110) in the second inner surface (112).

The second reinforcing portion (700) has a second flame passage (710) provided to guide the flame (50) discharged to the second inner surface (112) along the second direction (F2).

The second reinforcing portion (700) may be disposed in the second empty space (130a, 130b) so that the second flame passage (710) is positioned coaxially with the second imaginary center line (L2) of the secondary battery (220, 320) in the second row of the adjacent module. As one example, the second reinforcing portion (700) may have the same structure as the first reinforcing portion (600).

The second reinforcing portion (700) may comprise a plurality of second flame passages (710) partitioned by a second rib (730), and may be disposed so that each of the second flame passages (710) is positioned coaxially with the second imaginary center line (L2) of each secondary battery arranged in the second row of the adjacent module. The plurality of second flame passages (710) may vary depending on the number of secondary batteries in the second row of each module.

In addition, the second reinforcing portion (700) may comprise a second heat-resistant sheet (720) for blocking the flame (50) in the second flame passage (710) from being transmitted to the adjacent module.

The second heat-resistant sheet (720) has heat resistance to the extent that can withstand flame (50). As the second heat-resistant sheet (720), a mica sheet may be used. The mica sheet is a heat-resistant sheet having an alumina silicate component. The mica sheet has a mica material.

Referring to Figures 5 and 6, the second heat-resistant sheet (720) may also be mounted on the outer surface of the second reinforcing portion (700) exposed to the second empty space (130a, 130b). In addition, the second heat-resistant sheet (720) may also be mounted on the inner surface of the second flame passage (710). The second heat-resistant sheet (720) may prevent the flame (50) moving along the second flame passage (710) from being transmitted to the surrounding parts.

For example, referring to Figure 7, in the second module (300), when the second secondary battery (320) of the second row is ignited, the positive terminal (321) of the second secondary battery (320) in the second row is opened in the second direction (F2) due to the flame (50).

When the positive terminal (321) of the second secondary battery (320) in the second row is opened, the flame (50) may be discharged to the second flame passage (710) along the second direction (F2).

The second reinforcing portion (700) is disposed so that the second flame passage (710) is positioned in a straight line with the second imaginary center line (L2) of the second secondary battery (320) in the second row, whereby upon ignition of the second secondary battery (320) in the second row, it may guide the flame (50) to the second inner surface (112) of the pack case (110).

Through such a structure, in the battery pack (100), as the first reinforcing portion (600) is provided in each of the first empty spaces (120a, 120b) and the second reinforcing portion (700) is provided in each of the second empty spaces (130a, 130b), the rigidity of the pack case (110) can be reinforced.

In addition, the battery pack (100) can prevent the flame (50) from being transmitted to the surrounding secondary batteries and the surrounding modules by providing the first flame passage (610) and the second flame passage (710) in the direction where the positive terminal is opened. The first flame passage (610) and the second flame passage (710) are spaced apart along the diagonal direction.

The preferred examples of the present invention as described above have been disclosed for illustrative purposes. Those skilled in the art having ordinary knowledge of the present invention will be able to make various modifications, changes, and additions within the spirit and scope of the present invention, and such modifications, changes, and additions should be regarded as falling within the scope of the following claims.

## Claims

1. A battery pack comprising:
a pack case having a first inner surface, a second inner surface facing the first inner surface, and an internal space between the first inner surface and the second inner surface; and
a plurality of modules disposed in the internal space of the pack case and including a plurality of secondary batteries having a first end with a vent portion and a second end in a direction opposite to the first end, wherein
each of the secondary batteries is arranged such that an imaginary center line passing through the first end and the second end is not parallel or orthogonal to the first inner surface and the second inner surface, respectively; and
in each of the modules, when at least one secondary battery is disposed such that the first end is closer to the first inner surface than the second end, another secondary battery is disposed such that the first end is closer to the second inner surface than the second end.

2. The battery pack according to claim 1, wherein
in each module, the plurality of secondary batteries is disposed in multiple rows such that the first ends of the secondary batteries in a first row adjacent to the first surface and the first ends of the secondary batteries in a second row adjacent to the second surface face different directions, and
in each module, the plurality of secondary batteries is disposed in parallel along diagonal directions in which imaginary center lines are inclined relative to the first inner surface and the second inner surface, respectively.

3. The battery pack according to claim 2, wherein
in two modules adjacent to each other, the secondary batteries in the first row of any one module and the secondary batteries in the second row of another module are disposed such that their respective imaginary center lines are coaxially positioned.

4. The battery pack according to claim 2, wherein
the second ends of the secondary batteries in the first row of any one module are disposed to face the second ends of the secondary batteries in the second row of another module.

5. The battery pack according to claim 2, wherein
the two modules adjacent to each other are disposed such that a first empty space is formed between them and the first inner surface, and a second empty space is formed between them and the second inner surface.

6. The battery pack according to claim 5, each module is provided so that
upon ignition of the secondary battery in the first row, a flame is discharged toward the first empty space, and
upon ignition of the secondary battery in the second row, a flame is discharged toward the second empty space.

7. The battery pack according to claim 6, further comprising:
a first reinforcing portion disposed in the first empty space and having a first flame passage provided so that the flame generated upon ignition of the secondary battery in the first row is accommodated; and
a second reinforcing portion disposed in the second empty space and having a second flame passage provided so that the flame generated upon ignition of the secondary battery in the second row is accommodated.

8. The battery pack according to claim 7, wherein
the first reinforcing portion is positioned so that the first flame passage faces the first end of the secondary battery in the first row of the adjacent module, and
the second reinforcing portion is positioned so that the second flame passage faces the first end of the secondary battery in the second row of the adjacent module.

9. The battery pack according to claim 8, wherein
the first reinforcing portion comprises a plurality of first flame passages partitioned by a first rib.

10. The battery pack according to claim 8, wherein
the first reinforcing portion further comprises a first heat-resistant sheet disposed in the first flame passage.

11. The battery pack according to claim 10, wherein
the first heat-resistant sheet comprises a mica sheet having an alumina silicate component.

12. The battery pack according to claim 8, wherein
the second reinforcing portion comprises a plurality of second flame passages partitioned by a second rib.

13. The battery pack according to claim 8, wherein
the second reinforcing portion further comprises a second heat-resistant sheet disposed in the second flame passage.

14. The battery pack according to claim 13, wherein
the second heat-resistant sheet comprises a mica sheet having an alumina silicate component.

15. The battery pack according to claim 1, wherein
the first end comprises a positive terminal, and the second end comprises a negative terminal.
